# EUROPEAN PATENT SPECIFICATION

(11) **EP 3 832 043 B1**
(45) Date of publication and mention of the grant of the patent: **09.10.2024**
(21) Application number: 21154098.4
(22) Date of filing: 13.04.2017
(51) Int. Cl.: E04B 5/04, E03C 1/00, E04B 5/48, F16L 27/12, F16L 37/00

(54) **CONSTRUCTION ELEMENTS INCLUDING PIPES AND AN INSERT COUPLING**
KONSTRUKTIONSELEMENTE MIT ROHREN UND EINER EINSATZKOPPLUNG
ÉLÉMENTS DE CONSTRUCTION COMPRENANT DES TUYAUX ET UN RACCORD À INSERT

(30) Priority: 13.04.2016 NL 2016600
(43) Date of publication of application: 09.06.2021
(62) Divisional of application: 17719735.7
(73) Proprietor: Dyka B.V., 8331 LJ Steenwijk (NL)
(72) Inventor: ZUURMOND, Johannes, 8331 LJ Steenwijk (NL); DE BOER, Klaas Alexander, 8331 LJ Steenwijk (NL)
(74) Representative: van Trier, Norbertus Henricus Gerardus

(56) References cited:
- EP-A1- 1 972 844
- EP-A1- 2 818 606
- EP-A2- 0 924 360
- EP-A2- 1 126 095
- WO-A1-81/00445
- WO-A2-2010/008295
- DE-A1- 10 214 967
- FR-A1- 2 859 744
- US-A- 4 386 796

## Description

### BACKGROUND OF THE INVENTION

The present invention relates to an assembly of a first plate-shaped construction element and a second plate-shaped construction element which, parallel to each other, form a horizontal floor or ceiling of a building.

Such prefab construction elements, for instance made of concrete, may already have been provided with internal pipes for instance for the electrical wiring of the building.

There is a need to also provide prefab construction elements with pipes for the water management, sewer system, electricity, air treatment or ventilation, which pipes can easily be coupled during installation.

EP 0 924 360 is considered to be prior art and describes a factory-made construction element for a system of joists, multiple construction elements being designed to be placed adjacent to each other on a framework. A layer of light clinker concrete is provided between a first concrete layer and a second concrete layer, and an elongate reinforcement member extends in a longitudinal direction through the construction element between the concrete layers.

WO 2010/008295 is considered to be prior art and describes a construction element with pipework. The pipework comprises a coupling piece which enables easy connection of conduits after casting of the construction element.

### SUMMARY OF THE INVENTION

The invention provides an assembly according to claim 1.

The first construction element and the second construction element in which the first pipe and the second pipe have been accommodated, form prefab construction elements that can be transported to a building site in order to be placed in the building under construction, such as a concrete slab. The fragile outer ends of the pipes are either situated in the first recess, which is situated recessed from the head surface of the construction element, or said fragile outer ends may project from the construction element. In case the fragile outer ends of the pipes are situated in the first recess, the head surface will buffer the blows during transport and hoisting the construction element in, and the outer ends of the pipes remain well-protected. Once the construction elements have been placed, the pipes can be coupled one to the other by introducing the insert coupling according to the invention into the installation space and converting it to the second position or condition. The insert coupling comprises an intermediate pipe between the first pipe and the second pipe, and a slider sleeve around the intermediate pipe which can be shifted along the intermediate pipe, wherein the insert coupling can be converted between the first condition and the second condition by shifting the slider sleeve along and over the intermediate pipe.

In one embodiment, the second construction element contains a second recess that is adjacent to the second head surface, wherein the first recess and the second recess jointly define the installation space for the insert coupling. The recesses that are complementary to each other can in that case each remain small in size, whereas a sufficiently large installation space for the insert coupling is realized.

In one embodiment, the installation space debouches in the upper surface and/or the lower surface of the construction elements, so that the insert coupling can easily be placed in there from the top side or bottom side of the construction elements.

In one embodiment thereof, the installation space debouches in the upper surface or lower surface, and is bounded opposite the debouching location by a bottom surface in the base material of the construction elements. The insert coupling can then for instance be installed from the top side of the construction elements, wherein the bottom surface prevents the insert coupling from falling down when it is being placed in there.

In one embodiment, halfway the height of the first construction element, the first head surface merges via a support surface into a front surface situated recessed from the first head surface in order to form a support edge of the first construction element, and the second head surface merges via a bearing surface into a front surface situated recessed from the second head surface in order to form a bearing edge of the second construction element, wherein the second construction element with its bearing edge is situated at the support edge. The construction elements can then easily be placed in a mutual bond.

In an alternative, blunt embodiment the first head surface and the second head surface extend over the full height of the construction elements.

In one embodiment, the first pipe has a first end edge that is situated in a first wall of the installation space or is situated recessed in the base material of the first construction element, and/or the second pipe has a second end edge that is situated in a second wall of the installation space or is situated recessed in the base material of the second construction element. As a result, the pipe in question is also protected inside the recess against for instance the hoist slings with which the construction element can be hoisted up.

In one embodiment thereof, the first pipe and/or the second pipe behind the first end edge or second end edge, respectively, is free from the base material of the construction elements and an annular space extends around the outer end of the first pipe and/or the second pipe. The insert coupling can then easily be connected by for instance partially pushing it over the pipe, wherein the overlapping portion ends up in the annular space.

In one embodiment, in the second position or condition, the insert coupling and the first pipe, and the insert coupling and the second pipe, are partially inserted into each other in order to connect the first pipe and the second pipe in a flowing manner.

In one embodiment thereof, the insert coupling comprises a first introduction pipe that fits in the first pipe, and/or a second introduction pipe that fits in the second pipe. The insert coupling can then be installed by inserting the introduction pipe in question into the pipe in the construction element.

In one embodiment thereof, a circumferential, flexible sealing extends at the interior of the first pipe and/or second pipe, which sealing engages onto the first introduction pipe or the second introduction pipe, respectively. The flexible sealing has then already been incorporated in the construction elements and is protected in there.

In an alternative embodiment, the insert coupling comprises a first pipe coupling that engages around the first pipe, and/or a second pipe coupling that engages around the second pipe. The insert coupling can then easily be connected by placing the pipe coupling in question at the end edge of the pipe and subsequently, for instance pushing it over the pipe.

In one embodiment, the insert coupling has been provided with a circumferential, flexible sealing inside the first pipe coupling and/or the second pipe coupling.

In one embodiment, the first pipe coupling and/or the second pipe coupling comprises a one-way coupling, which blocks retraction of the first pipe or second pipe immediately once it has been engaged. Subsequent to placing and pushing, the one-way coupling is immediately fixated.

Alternatively, the first pipe coupling and/or the second pipe coupling is a press-coupling, compression fitting or a coupling that is threaded at the first pipe or second pipe.

In one embodiment, the insert coupling comprises an intermediate pipe having the first pipe coupling and the second pipe coupling at its outer ends. The pipe couplings and the intermediate pipe then form a kit that is easy to assemble in the installation space.

In one embodiment thereof, the first pipe coupling and/or the second pipe coupling comprises a one-way coupling that engages around the intermediate pipe.

In one embodiment, the insert coupling comprises a first slider pipe and a second slider pipe between the parts that engage onto the first pipe or second pipe, which slider pipes are telescopically inserted into each other, wherein the insert coupling can be converted between the first position and the second position by shifting the slider pipes relative to each other. The insert coupling can then be installed by telescopically extending the slider pipes so that the engaging parts of the insert coupling engage onto the pipes of the construction elements. This is easy to do using two hands.

In one embodiment thereof, the insert coupling comprises a circumferential, flexible sealing between the first slider pipe and the second slider pipe.

In a combined embodiment, the insert coupling can be converted between the first condition and the second condition by shifting the slider sleeve along the intermediate pipe and over the first or second introduction pipe. The introduction pipes may be separate pipe members or form an integral part of the insert coupling.

In one embodiment, the first pipe and the second pipe have a circular cross-section having an outer diameter of 30-160 mm, preferably 40-125 mm, more preferably 50-90 mm. They can for instance be used as sewer pipes.

In one embodiment, the first pipe and the second pipe may have a circular cross-section having an outer diameter of 30-125 mm. They can for instance be used as ventilation ducts.

In one embodiment, the first pipe and the second pipe are medium transporting pressure pipes having a circular cross-section having an outer diameter of 10-90 mm, preferably 14-63 mm, more preferably 16-50 mm, more preferably 16-40 mm, most preferably 16-25 mm. They can for instance be used as water supply pipes.

In one embodiment, the first pipe and the second pipe may have an oval cross-section.

Alternatively, the first pipe and the second pipe may have a rectangular or square cross-section.

Said oval, rectangular or square cross-sections will for instance make the pipes highly suitable for use as ventilation ducts.

Said pipe diameters and pipe cross-sections and the various embodiments of the insert coupling, in particular their connecting parts, may be used together in any combination according to need.

In a preferred embodiment, the base material of the construction elements is concrete.

In a preferred embodiment, the base material of the construction elements is wood.

In a preferred embodiment, the base material of the construction elements is synthetic material, such as PUR, epoxy or polyester.

In a preferred embodiment, the base material of the construction elements is metal, such as iron.

In a preferred embodiment, the first pipe and the second pipe have been made of synthetic material, such as PVC or PE.

In a preferred embodiment, the first pipe and the second pipe have been made of metal, such as copper or iron.

In a preferred embodiment, the insert coupling has been made of synthetic material, such as PVC or PE.

In a preferred embodiment, the insert coupling has been made of metal, such as copper or iron.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A-1H show isometric views and top views of two concrete slabs having cast sewer pipes in them and a coupling for the pipes, according to an embodiment that helps to understand the invention, but is not covered by the claimed invention;
Figure 2 shows an isometric view of a variant of the embodiment according to figures 1A-1H, which helps to understand the invention, but is not covered by the claimed invention;
Figures 3A-3F show isometric views and top views of two concrete slabs having cast air ducts in them and a coupling for the ducts, according to an embodiment of the claimed invention;
Figure 4 shows an isometric view of a variant of the embodiment of the claimed invention; and
Figures 5A-5G show isometric views and top views of two concrete slabs having cast water supply pipes in them and a coupling for the pipes, according to an embodiment that helps to understand the invention but is not covered by the claimed invention.

### DETAILED DESCRIPTION OF THE DRAWINGS

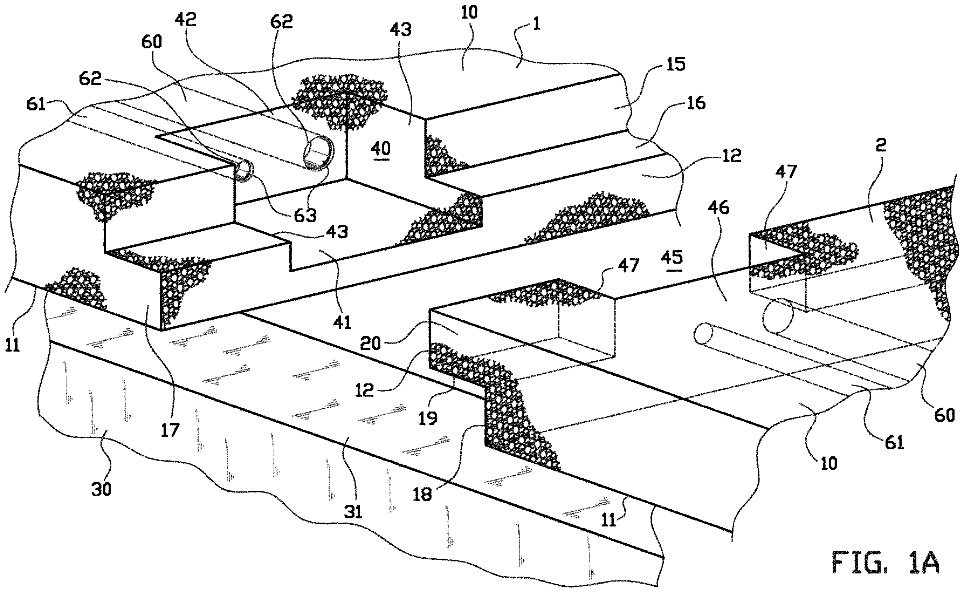

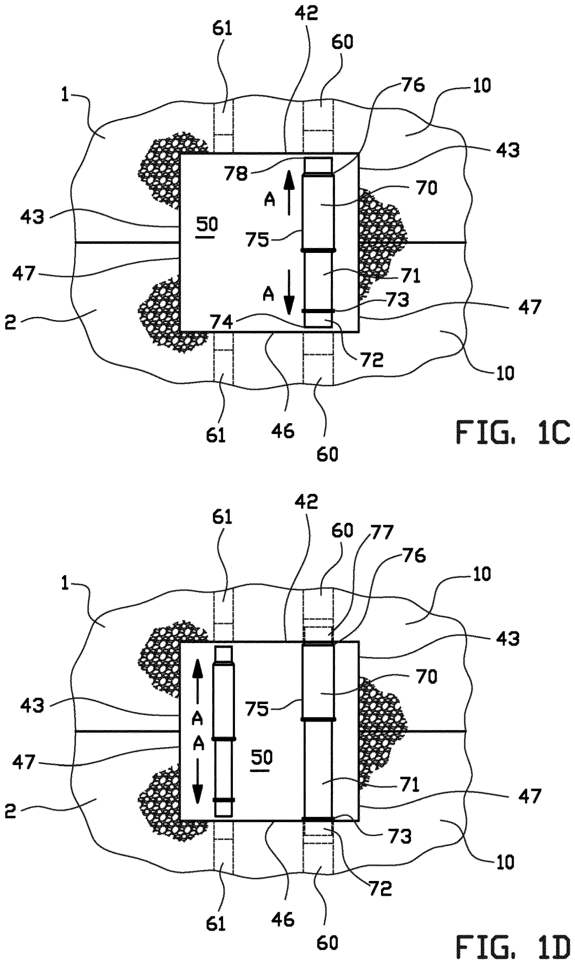

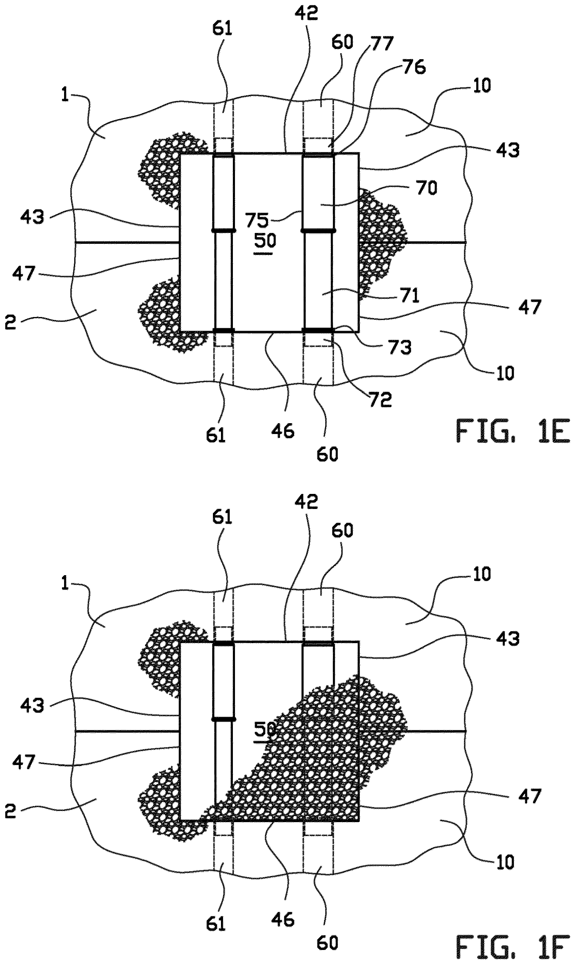

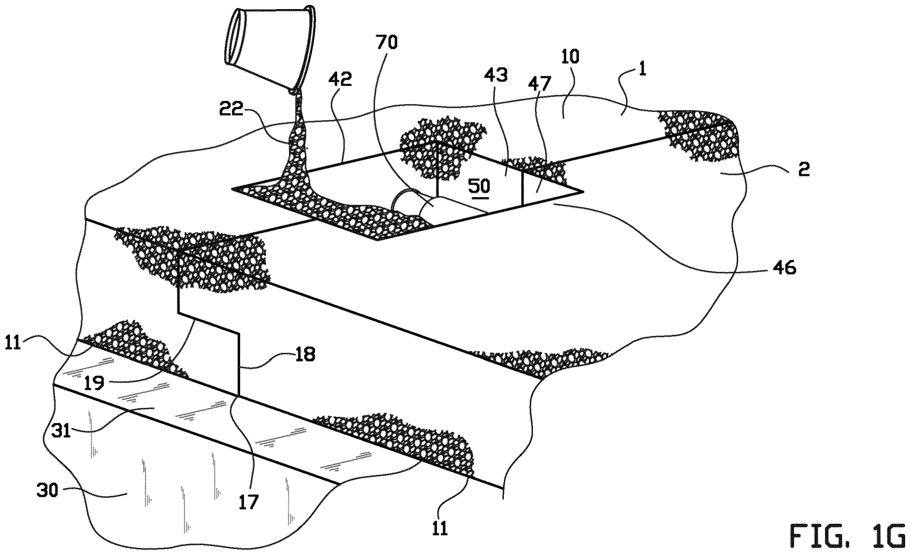

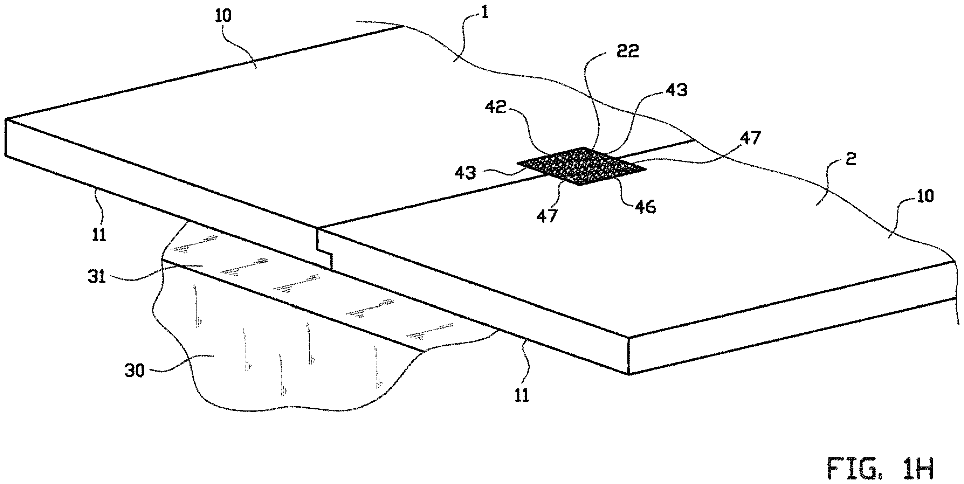

Figure 1A schematically shows a part of a building that is being erected, constructed using prefab plate-shaped construction elements having a rectangular basic outline. In this example, the construction elements are a first concrete slab 1 and a second concrete slab 2, which are placed horizontally along their edges on a wall 30 in order to span a room and to form a floor. Possible base materials for the construction elements are concrete, wood, steel or synthetic material, such as PUR, epoxy or polyester.

The concrete slabs 1, 2 both have an upper surface 10 and a lower surface 11 extending parallel to each other, and a head surface 12 extending transverse thereto. At approximately halfway the height, the head surface 12 of the first concrete slab 1 merges via a support surface 16 into a front surface 15 situated recessed, as a result of which a rebate or support edge 17 extending over the width of the first concrete slab 1 is defined. At approximately halfway the height, the head surface 12 of the second concrete slab 2 merges via a bearing surface 19 into a front surface 18 situated recessed, as a result of which a nose or bearing edge 20 extending over the width of the second concrete slab 2 is formed. When constructing the building, the first concrete slab 1 will be placed on the lateral side on the upper surface 31 of the wall 30, after which the second concrete slab 2 will be placed thereon with the bearing edge 20 in order to form a floor. The front surface 18 of the second concrete slab 2 will then abut the head surface 12 of the first concrete slab 1.

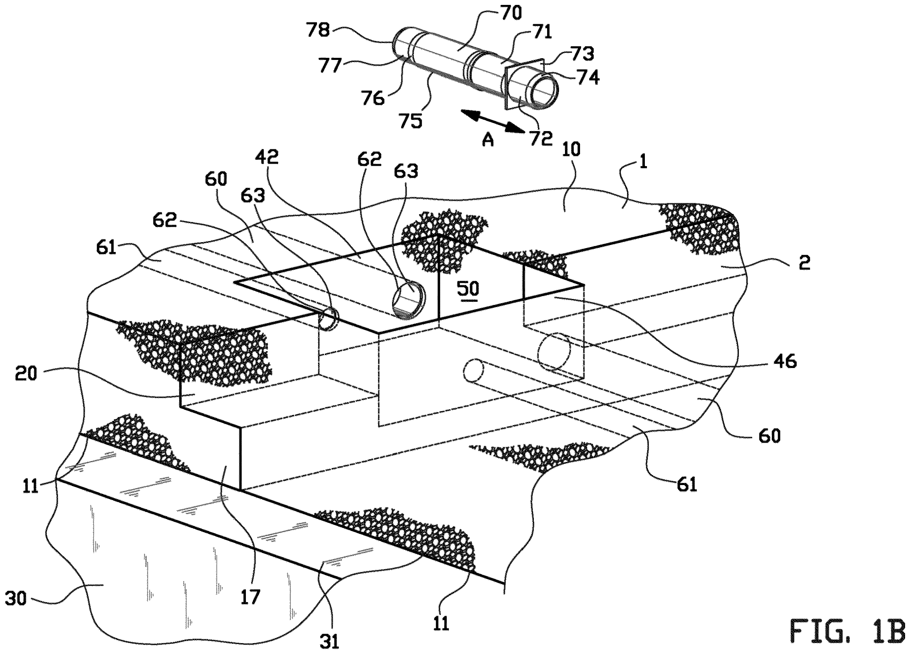

The first concrete slab 1 has been provided with a first recess 40 that is bounded by a bottom surface 41 extending parallel to the upper surface 10 and that is situated lower than the support surface 16, a rear surface 42 extending parallel to the head surface 12 and that is situated recessed more deeply than the front surface 15, and two parallel side surfaces 43 transverse thereto. The second concrete slab 2 has been provided with a second recess 45 that is bounded by a rear surface 46 that is situated in the extension of the front surface 18, and two parallel side surfaces 47 transverse thereto. In the placed condition of the concrete slabs 1, 2 as shown in figure 1B, the first recess 40 and the second recess 45 jointly form a closed off installation space 50 having a rectangular contour that can only be accessed from above. The installation space 50 with the rear surfaces 42, 46 that are situated recessed, is always the same for all three embodiments described herein.

Figures 1A-1H show further details of the embodiment not within the scope of the invention. In this embodiment, two parallel sewer pipes 60, 61 have been accommodated in the floor slabs 1, 2, the sewer pipes having different diameters in this example. At their ends the synthetic sewer pipes 60, 61 have a bush having an end edge 62, which is situated in the rear surface 42, 46 of the installation space 50 or which is situated recessed a few mm therefrom, and an internal rubber sealing 63 just behind the end edge 62. The sewer pipes 60, 61 are situated in each other's extension and are connected to each other in a flowing manner by means of insert couplings 70.

As shown in figures 1B and 1C, the insert couplings 70 have a first cylindrical, synthetic slider pipe 71 which at one side merges into a cylindrical introduction pipe 72 having an oblique pilot edge 74 and a circumferential flange 73. The first synthetic slider pipe 71 has been inserted in a wider second synthetic slider pipe 75 which at one side, via a stop edge 76, merges into an introduction pipe 77 having an oblique pilot edge 78. There is an internal, rubber sealing in the second slider pipe 75, which sealing seals off all around against the first slider pipe 71. The slider pipes 71, 75 can be shifted in direction A relative to each other in order to adjust the distance between the introduction pipes 72, 77.

Once the first concrete slab 1 and the second concrete slab 2 have been placed as shown in figure 1B, the insert couplings 70 are being placed in the first retracted position in the installation space 50 and subsequently in direction A brought into the second, extended position as shown in figures 1C-1E. As a result, the introduction pipes 72, 77 extend up to the circumferential flange 73 or the stop edge 76, respectively, in the sewer pipes 60, 61, so that the sealings 63 engage onto them in a watertight manner. Subsequently the installation space 50 is filled with fluid concrete 22 to connect the upper surfaces 10 of the concrete slabs 1, 2 to each other.

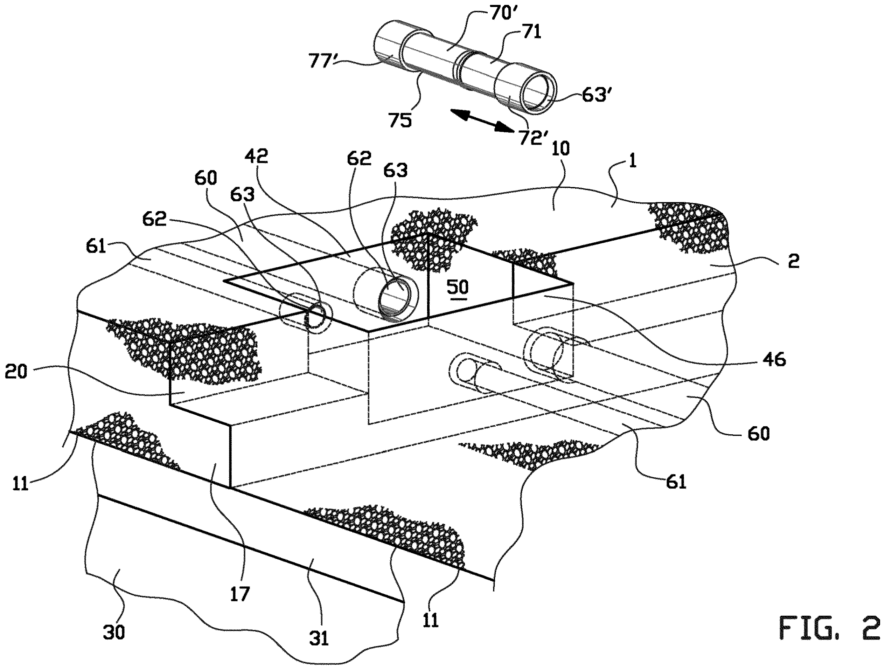

Figure 2 shows a variant of the embodiment as shown in figures 1A-1H. Corresponding parts have been provided with the same reference numbers. Only the parts deviating therefrom will be further discussed below. In this variant the sewer pipes 60, 61 are ending in a cylindrical, annular space 21 which debouches in the rear surfaces 42, 46, as a result of which the outer ends will sit in there so as to be free from the concrete slabs 1, 2. The end edges 62 of the sewer pipes 60, 61 are situated recessed in the rear surfaces 42, 46 or a few mm therefrom. The insert coupling 70' comprises the first cylindrical synthetic slider pipe 71 which, in this variant, merges into a wider accommodation pipe 72' in which a rubber sealing 63' has been accommodated. The second slider pipe 75 also merges into a wider accommodation pipe 77' having said rubber sealing 63'. Once the concrete slabs 1, 2 have been placed, the insert coupling 70' is placed in the installation space 50 in the retracted position and is telescopically extended in direction A, as a result of which the accommodation pipes 72', 77' end up in the cylindrical annular spaces 21 and engage onto the sewer pipes 60, 61 in a sealing manner inside them.

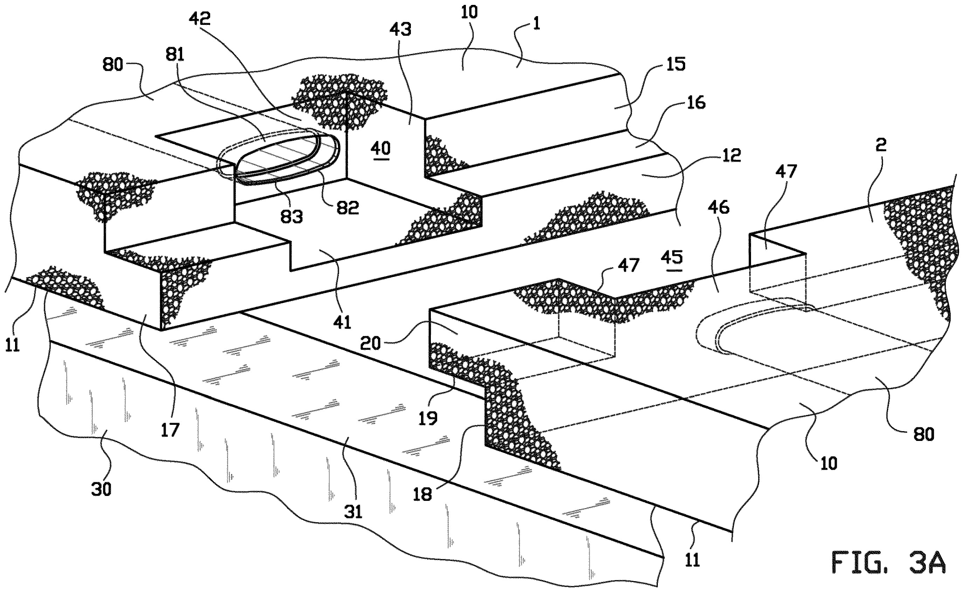

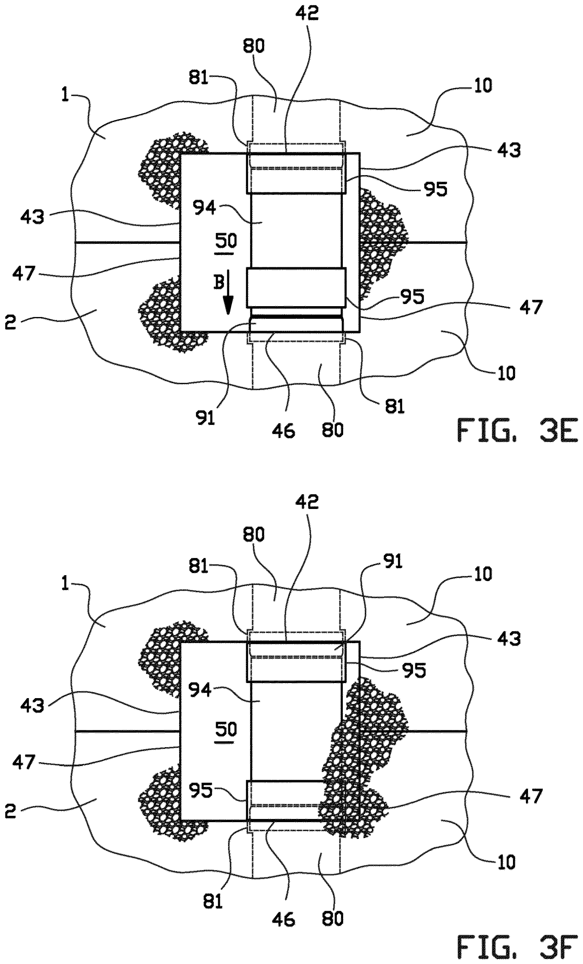

Figures 3A-3F show further details of an embodiment of the invention. In this embodiment air ducts 80 having an oval cross-section have been accommodated in the floor slabs 1, 2. The synthetic air ducts 80 have an end edge 82 which is situated in the rear surface 42, 46 of the installation space 50 or is situated recessed a few mm therefrom, and an internal pilot edge 83 along the end edge 82. The internal pilot edge 83 is situated in a widened insert end 81 of the air duct 80. The air ducts 80 are situated in each other's extension and are connected to each other in a flowing manner by means of a synthetic insert coupling 90.

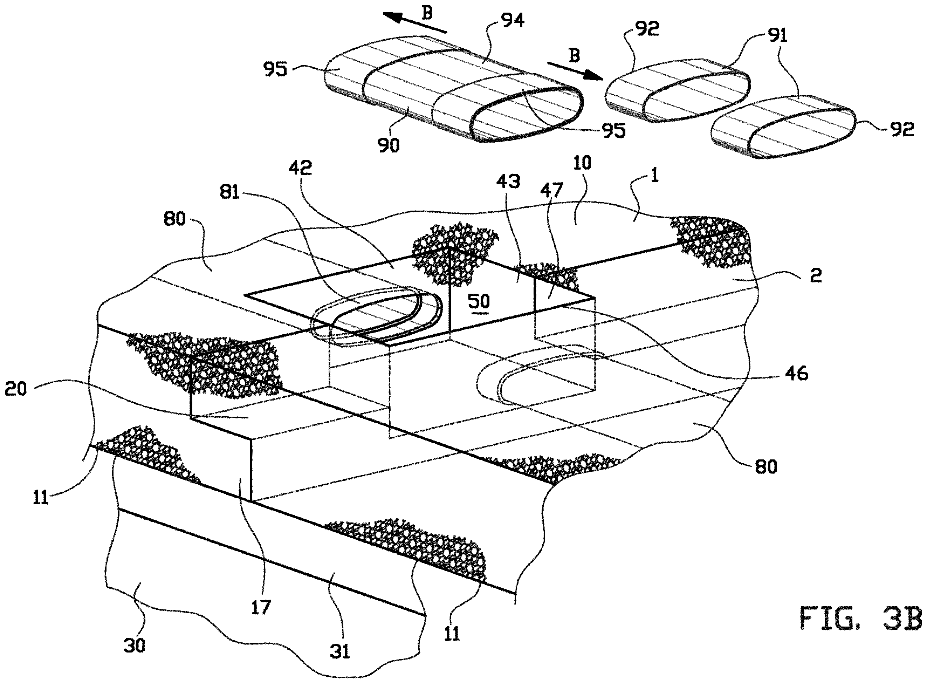

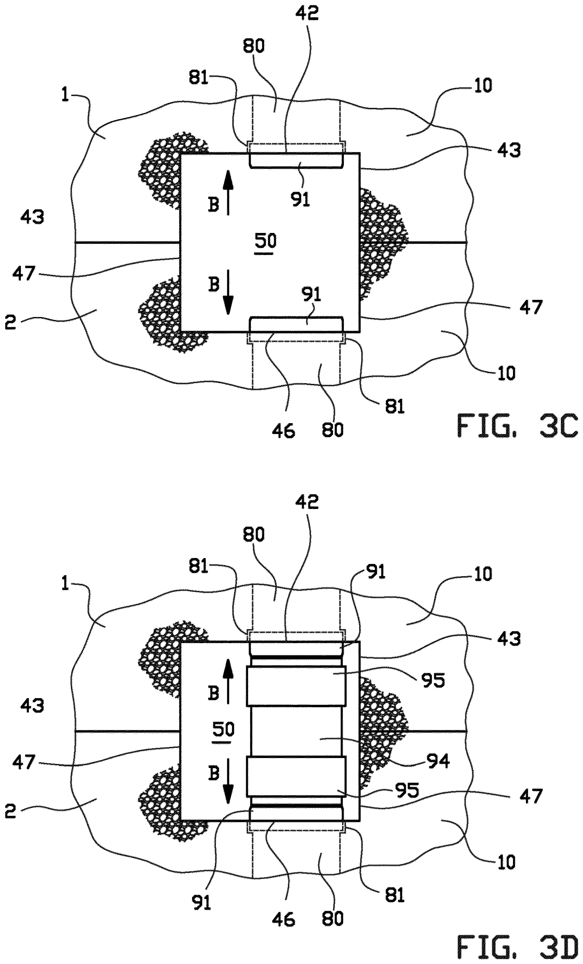

As shown in figures 3B and 3C the insert coupling 90 comprises two introduction pipes 91 having the same cross-section and size as the air ducts 80. The introduction pipes 91 fit in the widened insert end 81 and have been provided with an oblique pilot edge 92 at both sides to facilitate the introduction. The insert coupling 90 comprises an intermediate pipe 94 having the same cross-section and size as the introduction pipes 91, and around them two slider sleeves 95 having the same cross-section which can be shifted in direction B over the intermediate pipe 94.

Once the first concrete slab 1 and the second concrete slab 2 have been placed as shown in figure 3B, the introduction pipes 91 are put into the insert ends 81 of the air ducts 80, wherein approximately half their length is accommodated in the insert ends 81 and the remainder thereof protrudes in the installation space 50. The slider sleeves 95 around the intermediate pipe 94 are shifted towards each other so that the intermediate pipe 94 defines the largest length of the whole. With this length, the intermediate pipe 94 fits between the introduction pips 91 with a little play as shown in figure 3D. Subsequently the slider sleeves 95 are shifted away from each other in direction B over the introduction pipes 91 up to the rear surfaces 42, 46 of the installation space 50. Finally, in this example, the installation space 50 is filled with fluid concrete 22 in order to connect the upper surfaces 10 of the concrete slabs 1, 2 to each other as explained above. The fluid concrete 22 ensures that the insert coupling 90 is closed off airtight. The material with which the installation space 50 is being filled, may be the same material as the base material of the construction elements.

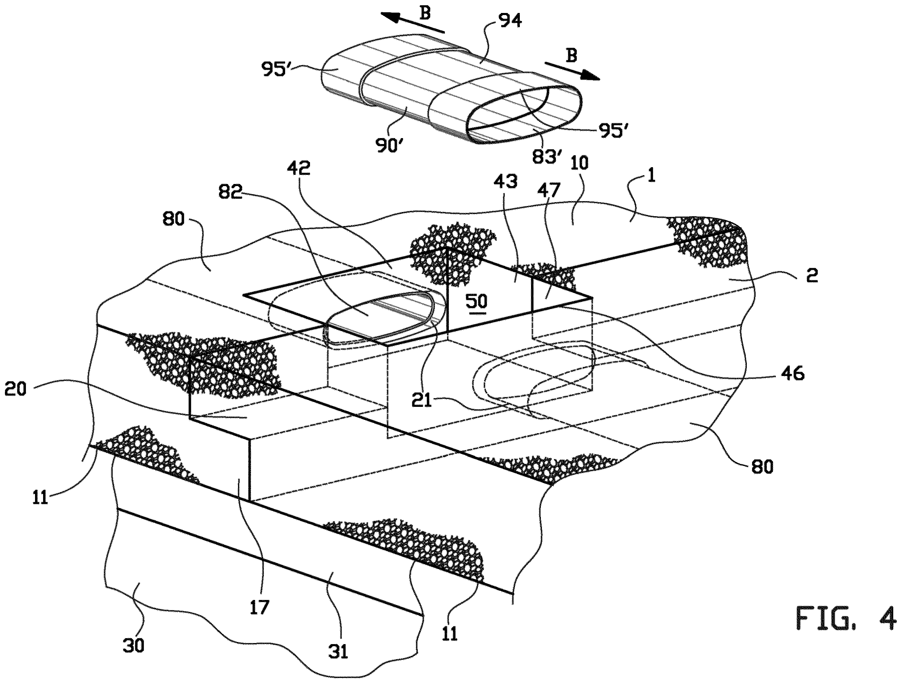

Figure 4 shows a variant of the embodiment as shown in figures 3A-3F. Corresponding parts have been provided with the same reference numbers. Only the parts deviating therefrom will be further discussed below. In this variant, the oval air ducts 80 are ending in an oval, annular space 21 which debouches in the rear surfaces 42, 46, as a result of which the outer ends will sit in there so as to be free from the concrete slabs 1, 2. The end edges 82 of the air ducts 80 are situated recessed in the rear surfaces 42, 46 or a few mm therefrom. The insert coupling 90' comprises the intermediate pipe 94 with the two pipe couplings or slider sleeves 95' surrounding it, which pipe couplings or slider sleeves may have been provided with a circumferential pilot edge 83'. Once the concrete slabs 1, 2 have been placed, the insert coupling 90' is placed in the installation space with the slider sleeves 95' in the position in which they have been shifted towards each other and are telescopically extended in direction A, as a result of which the slider sleeves 95' partially end up in the oval, annular spaces 21 and inside them engage onto the air ducts 80 while retaining overlap with the intermediate pipe 94.

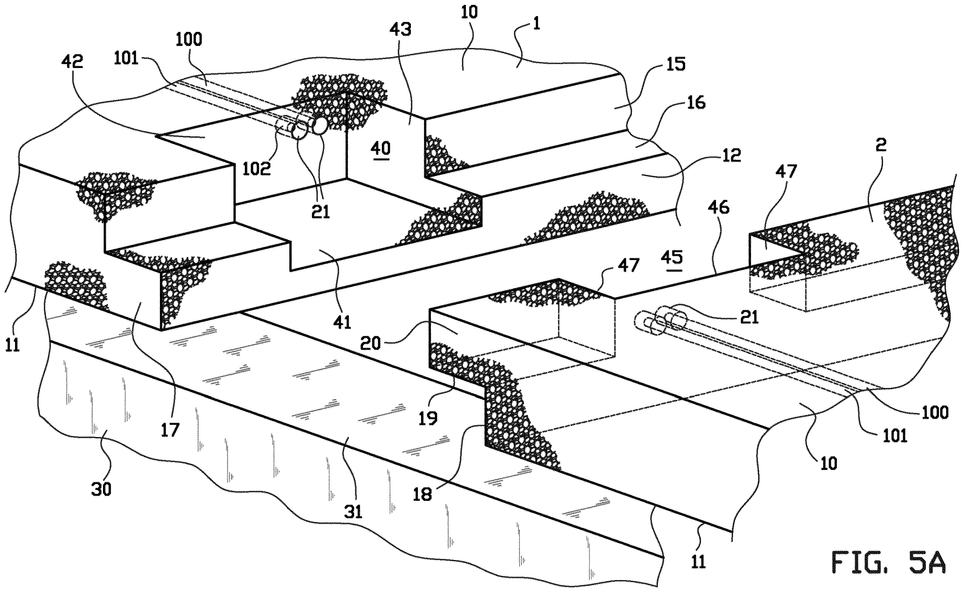

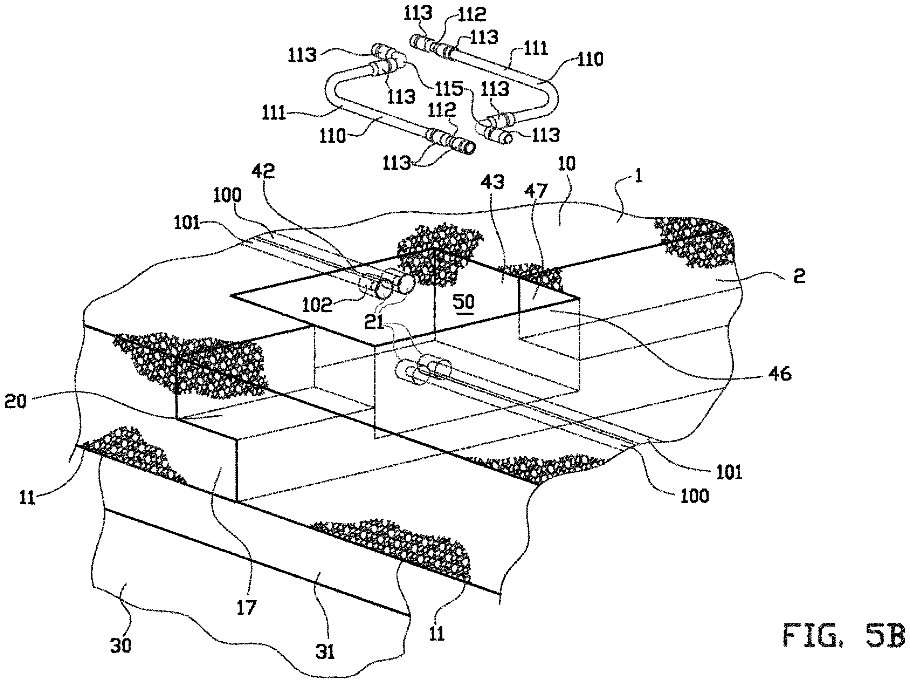

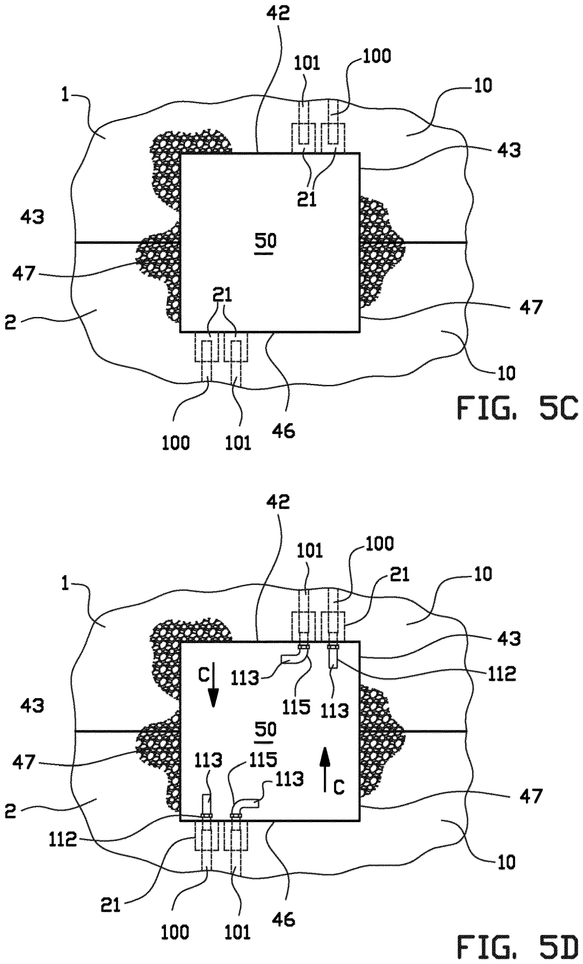

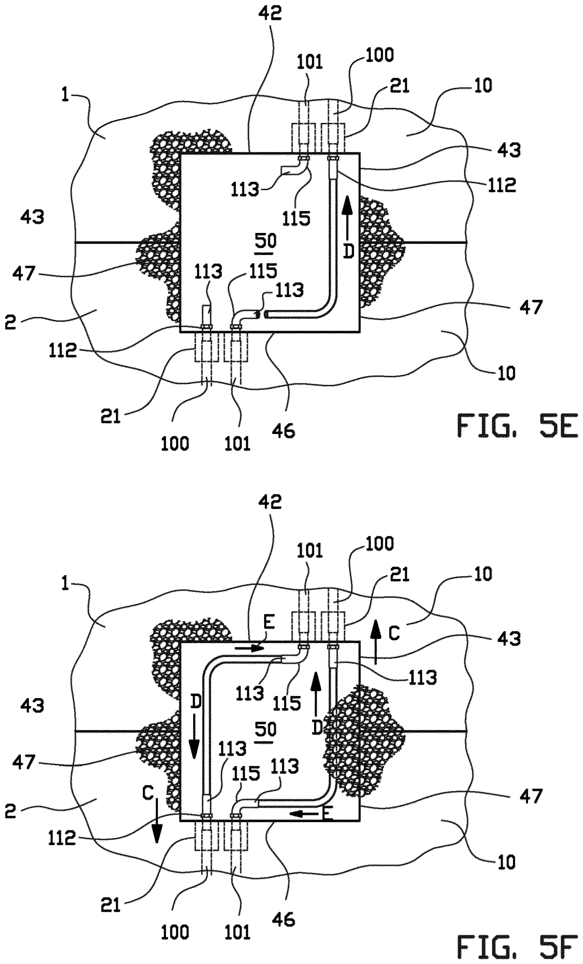

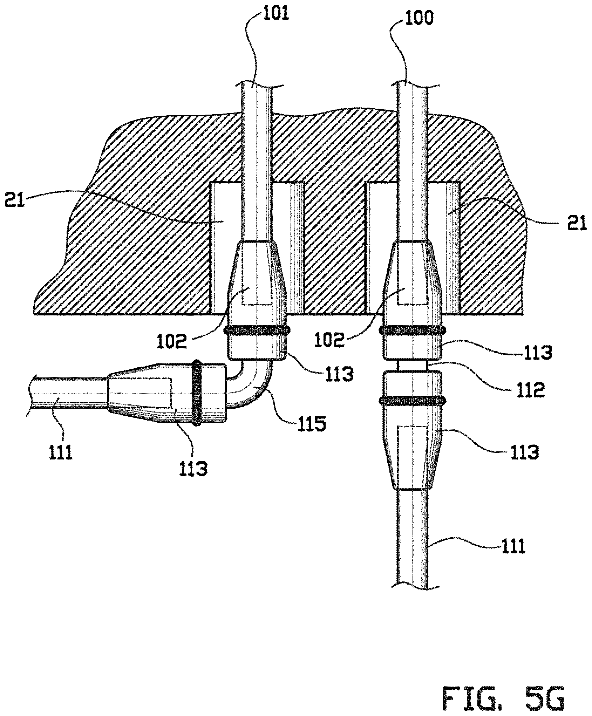

Figures 5A-5G show further details of the further embodiment of the invention. In this embodiment pairs of synthetic water supply pipes 100, 101 have been accommodated in the floor slabs 1, 2, for instance for passing through hot and cold tap water, or for underfloor heating. The water supply pipes 100, 101 have an end edge 102 which is situated in the rear surface 42, 46 of the installation space 50 or is situated recessed a few mm therefrom. The outer end of the water supply pipes 100, 101 is situated in a cylindrical space 21 which debouches in the rear surfaces 42, 46. The pairs of end edges 102 are situated opposing each other, off-center from the rear surfaces 42, 46. The water supply pipes 100, 101 are connected to each other in a flowing manner using insert couplings 110.

As shown in figure 5F, the insert couplings 110 each comprise a synthetic intermediate pipe 111 having the same diameter as the water supply pipes 100, 101. The intermediate pipes 111 are pre-bent in an L-shape. At the one outer end, there is a straight pipe coupling 112 and at the other outer end there is a right-angled pipe coupling 115. Said pipe couplings 112, 115 both contain two so-called 'push-fit' or one-way couplings 113 that accommodate the outer ends of the water supply pipes 100, 101 or the synthetic pipe 110 in a watertight manner. The introduced outer ends can only be detached by disassembling the one-way couplings 113.

Once the first concrete slab 1 and the second concrete slab 2 have been placed as shown in figure 3B, the straight couplings 112 are put with the one-way couplings 113 in direction C on the outside one of the pairs of water supply pipes 100, 101 and the right-angled couplings 115 are put in direction C on the inside one of the pairs of water supply pipes 100, 101, with the as yet free one-way coupling 113 facing away from the straight coupling 112. Subsequently the synthetic intermediate pipe 111 is inserted in direction D in the one-way coupling 113 of the straight pipe coupling 112. This provides sufficient flexibility to insert the other outer end easily in direction E in the one-way coupling 113 of the right-angled coupling 115. Finally, the installation space 50 is filled with fluid concrete 22 in order to connect the upper surfaces 10 of the concrete slabs 1, 2 to each other as explained above.

The above-mentioned characteristics in terms of shape of the pipes 60, 61, 80, 100, 101 and the insert couplings 70, 70', 90, 90', 110, in particular those parts that engage onto the pipes, can all be combined with each other. Per pipe, the engagement can take place inside the pipe or around the pipe, irrespective of the type of engagement at the other side of the insert coupling. The scope of protection as stated in the claims therefore is by no means restricted to the specific combinations described in detail above.

In the above-mentioned examples the pipes 60, 61, 80, 100, 101 and the parts of the various insert couplings 70, 70', 90, 90', 110 have been made of synthetic material, such as PVC or PE. Alternatively, the pipes and the parts have been made of metal, such as copper or iron.

The above description has been included to illustrate the operation of preferred embodiments of the invention and not to limit the scope of the invention. Starting from the above explanation many variants that fall within the scope of the present invention will be evident to an expert.

## Claims

1. Assembly of a first plate-shaped construction element (1) and a second plate-shaped construction element (2) which, parallel next to each other, form a horizontal floor or ceiling of a building, wherein a first pipe (80) has been accommodated in the first construction element (1) and a second pipe (80) has been accommodated in the second construction element (2), which pipes are coupled to each other by means of an insert coupling (90; 90') connecting the first pipe and the second pipe, wherein the first construction element (1) comprises a first head surface (12) and a first recess (40) adjacent thereto and the second construction element (2) comprises a second head surface (12) extending parallel to the first head surface, wherein the first recess (40) defines an installation space (50) for the insert coupling where the first pipe and the second pipe are ending, wherein the insert coupling (90; 90') can be converted from a first position or condition in which it can be placed in the installation space, to a second position or condition in which it engages onto the first pipe and the second pipe, **characterized in that** the insert coupling (90; 90') comprises an intermediate pipe (94) between the first pipe and the second pipe, and a slider sleeve (95; 95') around the intermediate pipe which can be shifted along the intermediate pipe, wherein the insert coupling (90; 90') can be converted between the first condition and the second condition by shifting the slider sleeve (95; 95') along and over the intermediate pipe (94).

2. Assembly according to claim 1, wherein in the second position or condition, the insert coupling (90; 90') and the first pipe, and the insert coupling and the second pipe have been partially inserted into each other.

3. Assembly according to claim 2, wherein the insert coupling comprises a first introduction pipe (91) that fits in the first pipe and/or a second introduction pipe (91) that fits in the second pipe.

4. Assembly according to claim 2 and claim 3, wherein the insert coupling (90; 90') can be converted between the first condition and the second condition by shifting the slider sleeve (95; 95') along the intermediate pipe (94) and over the first or second introduction pipe (91).

5. Assembly according to any one of the preceding claims, wherein the second construction element (2) contains a second recess (45) that is adjacent to the second head surface (12), wherein the first recess (40) and the second recess (45) jointly define the installation space (50) for the insert coupling (90).

6. Assembly according to any one of the preceding claims, wherein the installation space (50) debouches in the upper surface (10) and/or the lower surface (11) of the construction elements (1; 2).

7. Assembly according to claim 3, wherein the installation space (50) debouches in the upper surface (10) or lower surface (11) and opposite the debouching location is bounded by a bottom surface (41) in the base material of the construction elements (1; 2).

8. Assembly according to any one of the preceding claims, wherein halfway the height of the first construction element (1) the first head surface (12) merges via a support surface (16) into a front surface (15) situated recessed from the first head surface (12) in order to form a support edge of the first construction element (1), and wherein the second head surface (12) merges via a bearing surface (19) into a front surface (18) situated recessed from the second head surface (12) in order to form a bearing edge of the second construction element (2), wherein the second construction element (2) with its bearing edge is situated at the support edge.

9. Assembly according to any one on the claims 1-7, wherein the first head surface (12) and the second head surface (12) extend over the full height of the construction elements (1; 2).

10. Assembly according to any one of the preceding claims, wherein the first pipe (80) has a first end edge (82) that is situated in a first wall of the installation space (50) or is situated recessed in the base material of the first construction element (1), and/or wherein the second pipe (80) has a second end edge (82) that is situated in a second wall of the installation space (50) or is situated recessed in the base material of the second construction element (2), preferably wherein the first pipe and/or the second pipe behind the first end edge or second end edge, respectively, is free from the base material of the construction elements and an annular space extends around the outer end of the first pipe and/or the second pipe.

11. Assembly according to claim 3, wherein a circumferential, flexible sealing extends at the interior of the first pipe and/or second pipe, which sealing engages onto the first introduction pipe or the second introduction pipe, respectively.

12. Assembly according to claim 3, wherein the insert coupling (90') comprises a first pipe coupling (95') that engages around the first pipe, and/or a second pipe (95') coupling that engages around the second pipe, preferably wherein the insert coupling has been provided with a circumferential, flexible sealing inside the first pipe coupling and/or the second pipe coupling.

13. Assembly according to claim 12, wherein the insert coupling comprises an intermediate pipe having the first pipe coupling and the second pipe coupling at its outer ends, preferably wherein the first pipe coupling and/or the second pipe coupling comprises a one-way coupling that engages around the intermediate pipe.

14. Assembly according to any one of the preceding claims, wherein the first pipe and the second pipe have a circular cross-section having an outer diameter of 30-160 mm, preferably 40-125 mm, more preferably 50-90 mm, preferably wherein the first pipe and the second pipe have an oval cross-section.

15. Assembly according to any one of the preceding claims, wherein the insert coupling (90; 90') comprises two slider sleeves (95; 95') that can be shifted along and over the intermediate pipe (94).

## Patentansprüche

1. Baugruppe aus einem ersten plattenförmigen Konstruktionselement (1) und einem zweiten plattenförmigen Konstruktionselement (2), die parallel nebeneinander einen horizontalen Boden oder Decke eines Gebäudes bilden, wobei ein erstes Rohr (80) in dem ersten Konstruktionselement (1) untergebracht ist und ein zweites Rohr (80) in dem zweiten Konstruktionselement (2) untergebracht ist, welche Rohre (80) mittels einer das erste Rohr und das zweite Rohr verbindenden Einsatzkupplung (90; 90') miteinander verbunden sind, wobei das erste Konstruktionselement (1) eine erste Kopffläche (12) und eine daran angrenzende erste Vertiefung (40) aufweist und das zweite Konstruktionselement (2) eine sich parallel zu der ersten Kopffläche erstreckende zweite Kopffläche (12) aufweist, wobei die erste Vertiefung (40) einen Einbauraum (50) für die Einsatzkupplung definiert, wo das erste Rohr und das zweite Rohr enden, wobei die Einsatzkupplung (90; 90') von einer ersten Position oder einem ersten Zustand, bei der oder dem sie in den Einbauraum eingesetzt werden kann, in eine zweite Position oder einen zweiten Zustand umgewandelt werden kann, bei der oder dem sie an dem ersten Rohr und dem zweiten Rohr in Eingriff gelangt, **dadurch gekennzeichnet, dass** die Einsatzkupplung (90; 90') ein Zwischenrohr (94) zwischen dem ersten Rohr und dem zweiten Rohr und eine Schiebehülse (95; 95') um das Zwischenrohr aufweist, die entlang dem Zwischenrohr verschoben werden kann, wobei die Einsatzkupplung (90; 90') durch Verschieben der Schiebehülse (95; 95') entlang dem und über das Zwischenrohr (94) zwischen dem ersten Zustand und dem zweiten Zustand umgewandelt werden kann.

2. Baugruppe nach Anspruch 1, wobei in der zweiten Position oder dem zweiten Zustand die Einsatzkupplung (90; 90') und das erste Rohr und die Einsatzkupplung und das zweite Rohr teilweise ineinander eingesetzt worden sind.

3. Baugruppe nach Anspruch 2, wobei die Einsatzkupplung ein erstes Einführrohr (91), das in das erste Rohr passt, und/oder ein zweites Einführrohr (91), das in das zweite Rohr passt, aufweist.

4. Baugruppe nach Anspruch 2 und Anspruch 3, wobei die Einsatzkupplung (90; 90') durch Verschieben der Gleithülse (95; 95') entlang dem Zwischenrohr (94) und über das erste oder zweite Einführrohr (91) zwischen dem ersten Zustand und dem zweiten Zustand umgewandelt werden kann.

5. Baugruppe nach einem der vorhergehenden Ansprüche, wobei das zweite Konstruktionselement (2) eine zweite Vertiefung (45) enthält, die an die zweite Kopffläche (12) angrenzt, wobei die erste Vertiefung (40) und die zweite Vertiefung (45) gemeinsam den Einbauraum (50) für die Einsatzkupplung (90) definieren.

6. Baugruppe nach einem der vorhergehenden Ansprüche, wobei der Einbauraum (50) in die obere Fläche (10) und/oder die untere Fläche (11) der Konstruktionselemente (1; 2) mündet.

7. Baugruppe nach Anspruch 3, wobei der Einbauraum (50) in die obere Fläche (10) oder untere Fläche (11) mündet und gegenüber der Mündungsstelle durch eine Bodenfläche (41) in dem Grundmaterial der Konstruktionselemente (1; 2) begrenzt ist.

8. Baugruppe nach einem der vorhergehenden Ansprüche, wobei auf halber Höhe des ersten Konstruktionselements (1) die erste Kopffläche (12) über eine Auflagefläche (16) in eine von der ersten Kopffläche (12) vertieft gelegene Stirnfläche (15) übergeht, um eine Stützkante des ersten Konstruktionselements (1) zu bilden, und wobei die zweite Kopffläche (12) über eine Auflagefläche (19) in eine von der zweiten Kopffläche (12) vertieft gelegene Stirnfläche (18) übergeht, um eine Auflagekante des zweiten Konstruktionselements (2) zu bilden, wobei das zweite Konstruktionselement (2) mit seiner Auflagekante an der Stützkante gelegen ist.

9. Baugruppe nach einem der Ansprüche 1-7, wobei sich die erste Kopffläche (12) und die zweite Kopffläche (12) über die gesamte Höhe der Konstruktionselemente (1; 2) erstrecken.

10. Baugruppe nach einem der vorhergehenden Ansprüche, wobei das erste Rohr (80) eine erste Endkante (82) aufweist, die in einer ersten Wand des Einbauraums (50) gelegen ist oder vertieft in dem Grundmaterial des ersten Konstruktionselements (1) gelegen ist, und/oder wobei das zweite Rohr (80) eine zweite Endkante (82) aufweist, die in einer zweiten Wand des Einbauraums (50) gelegen ist oder in dem Grundmaterial des zweiten Konstruktionselements (2) vertieft gelegen ist, wobei vorzugsweise das erste Rohr und/oder das zweite Rohr hinter der ersten Endkante oder der zweiten Endkante jeweils frei von dem Grundmaterial der Konstruktionselemente ist und sich ein Ringraum um das äußere Ende des ersten Rohrs und/oder des zweiten Rohrs erstreckt.

11. Baugruppe nach Anspruch 3, wobei sich an der Innenseite des ersten Rohrs und/oder zweiten Rohrs eine umlaufende, flexible Dichtung erstreckt, welche Dichtung an dem ersten Einführrohr oder dem zweiten Einführrohr in Eingriff gelangt.

12. Baugruppe nach Anspruch 3, wobei die Einsatzkupplung (90') eine erste Rohrkupplung (95'), die um das erste Rohr in Eingriff gelangt, und/oder eine zweite Rohrkupplung (95'), die um das zweite Rohr in Eingriff gelangt, aufweist, wobei vorzugsweise die Einsatzkupplung mit einer umlaufenden, flexiblen Dichtung innerhalb der ersten Rohrkupplung und/oder der zweiten Rohrkupplung versehen worden ist.

13. Baugruppe nach Anspruch 12, wobei die Einsatzkupplung ein Zwischenrohr mit der ersten Rohrkupplung und der zweiten Rohrkupplung an seinen äußeren Enden aufweist, wobei vorzugsweise die erste Rohrkupplung und/oder die zweite Rohrkupplung eine Einweg-Kupplung aufweist, die um das Zwischenrohr in Eingriff gelangt.

14. Baugruppe nach einem der vorhergehenden Ansprüche, wobei das erste Rohr und das zweite Rohr einen kreisförmigen Querschnitt mit einem Außendurchmesser von 30-160 mm, vorzugsweise 40-125 mm, bevorzugter 50-90 mm besitzen, wobei vorzugsweise das erste Rohr und das zweite Rohr einen ovalen Querschnitt besitzen.

15. Baugruppe nach einem der vorhergehenden Ansprüche, wobei die Einsatzkupplung (90; 90') zwei Gleithülsen (95; 95') aufweist, die entlang dem und über das Zwischenrohr (94) verschoben werden können.

## Revendications

1. Ensemble d'un premier élément de construction en forme de plaque (1) et d'un second élément de construction en forme de plaque (2) qui, parallèles l'un à côté de l'autre, forment un plancher ou un plafond horizontal d'un bâtiment, dans lequel un premier tuyau (80) a été logé dans le premier élément de construction (1) et un second tuyau (80) a été logé dans le second élément de construction (2), lesquels tuyaux sont couplés l'un à l'autre au moyen d'un raccord d'insert (90 ; 90') reliant le premier tuyau et le second tuyau, dans lequel le premier élément de construction (1) comprend une première surface de tête (12) et un premier évidement (40) adjacent à celle-ci et le second élément de construction (2) comprend une seconde surface de tête (12) s'étendant parallèlement à la première surface de tête, dans lequel le premier évidement (40) définit un espace d'installation (50) pour le raccord d'insert où le premier tuyau et le second tuyau se terminent, dans lequel le raccord d'insert (90 ; 90') peut être convertir d'une première position ou condition dans laquelle il peut être placé dans l'espace d'installation, à une seconde position ou condition dans laquelle il vient en prise sur le premier tuyau et le second tuyau, **caractérisé en ce que** le raccord d'insert (90 ; 90') comprend un tuyau intermédiaire (94) entre le premier tuyau et le second tuyau, et un manchon coulissant (95 ; 95') autour du tuyau intermédiaire qui peut être déplacé le long du tuyau intermédiaire, dans lequel le raccord d'insert (90 ; 90') peut être converti entre la première condition et la seconde condition en déplaçant le manchon coulissant (95 ; 95') le long et au-dessus du tuyau intermédiaire (94).

2. Ensemble selon la revendication 1, dans lequel, dans la seconde position ou condition, le raccord d'insert (90 ; 90') et le premier tuyau, et le raccord d'insert et le second tuyau ont été partiellement insérés les uns dans les autres.

3. Ensemble selon la revendication 2, dans lequel le raccord d'insert comprend un premier tuyau d'introduction (91) qui s'adapte dans le premier tuyau et/ou un second tuyau d'introduction (91) qui s'adapte dans le second tuyau.

4. Ensemble selon la revendication 2 et la revendication 3, dans lequel le raccord d'insert (90 ; 90') peut être converti entre la première condition et la seconde condition en déplaçant le manchon coulissant (95 ; 95') le long du tuyau intermédiaire (94) et au-dessus du premier ou du second tuyau d'introduction (91).

5. Ensemble selon l'une quelconque des revendications précédentes, dans lequel le second élément de construction (2) contient un second évidement (45) qui est adjacent à la seconde surface de tête (12), dans lequel le premier évidement (40) et le second évidement (45) définissent conjointement l'espace d'installation (50) pour le raccord d'insert (90).

6. Ensemble selon l'une quelconque des revendications précédentes, dans lequel l'espace d'installation (50) débouche dans la surface supérieure (10) et/ou la surface inférieure (11) des éléments de construction (1 ; 2).

7. Ensemble selon la revendication 3, dans lequel l'espace d'installation (50) débouche dans la surface supérieure (10) ou la surface inférieure (11) et, à l'opposé de l'emplacement où il débouche, est délimité par une surface inférieure (41) dans le matériau de base des éléments de construction (1 ; 2).

8. Ensemble selon l'une quelconque des revendications précédentes, dans lequel à mi-hauteur du premier élément de construction (1), la première surface de tête (12) fusionne via une surface de support (16) dans une surface avant (15) située en retrait de la première surface de tête (12) afin de former un bord de support du premier élément de construction (1), et dans lequel la seconde surface de tête (12) fusionne via une surface d'appui (19) dans une surface avant (18) située en retrait de la seconde surface de tête (12) afin de former un bord d'appui du second élément de construction (2), dans lequel le second élément de construction (2), avec son bord d'appui, est situé au niveau du bord de support.

9. Ensemble selon l'une quelconque des revendications 1 à 7, dans lequel la première surface de tête (12) et la seconde surface de tête (12) s'étendent sur toute la hauteur des éléments de construction (1 ; 2).

10. Ensemble selon l'une quelconque des revendications précédentes, dans lequel le premier tuyau (80) présente un premier bord d'extrémité (82) qui est situé dans une première paroi de l'espace d'installation (50) ou est situé en retrait dans le matériau de base du premier élément de construction (1), et/ou dans lequel le second tuyau (80) présente un second bord d'extrémité (82) qui est situé dans une seconde paroi de l'espace d'installation (50) ou est situé en retrait dans le matériau de base du second élément de construction (2), de préférence dans lequel le premier tuyau et/ou le second tuyau derrière le premier bord d'extrémité ou le second bord d'extrémité, respectivement, est exempt du matériau de base des éléments de construction et un espace annulaire s'étend autour de l'extrémité extérieure du premier tuyau et/ou du second tuyau.

11. Ensemble selon la revendication 3, dans lequel un joint d'étanchéité flexible circonférentiel s'étend à l'intérieur du premier tuyau et/ou du second tuyau, lequel joint d'étanchéité vient en prise respectivement avec le premier tuyau d'introduction ou le second tuyau d'introduction.

12. Ensemble selon la revendication 3, dans lequel le raccord d'insert (90') comprend un premier raccord de tuyau (95') qui vient en prise autour du premier tuyau, et/ou un second raccord de tuyau (95') qui vient en prise autour du second tuyau, de préférence dans lequel le raccord d'insert a été pourvu d'un joint d'étanchéité flexible circonférentiel à l'intérieur du premier raccord de tuyau et/ou du second raccord de tuyau.

13. Ensemble selon la revendication 12, dans lequel le raccord d'insert comprend un tuyau intermédiaire présentant le premier raccord de tuyau et le second raccord de tuyau à ses extrémités extérieures, de préférence dans lequel le premier raccord de tuyau et/ou le second raccord de tuyau comprend un raccord unidirectionnel qui vient en prise autour du tuyau intermédiaire.

14. Ensemble selon l'une quelconque des revendications précédentes, dans lequel le premier tuyau et le second tuyau présentant une section transversale circulaire présentant un diamètre extérieur de 30 à 160 mm, de préférence de 40 à 125 mm, plus préférablement de 50 à 90 mm, de préférence dans lequel le premier tuyau et le second tuyau présentent une section transversale ovale.

15. Ensemble selon l'une quelconque des revendications précédentes, dans lequel le raccord d'insert (90 ; 90') comprend deux manchons coulissants (95 ; 95') qui peuvent être déplacés le long et au-dessus de l'élément intermédiaire (94).
